# EUROPEAN PATENT APPLICATION

(11) **EP 1 862 079 A1**
(43) Date of publication of application: **05.12.2007**
(21) Application number: 06712460.2
(22) Date of filing: 27.01.2006
(51) Int. Cl.: A23J 3/16, A23J 3/34, A23L 1/305, A23L 1/30

(54) **PROCESS FOR PRODUCING SOYBEAN PROTEIN**

(30) Priority: 27.01.2005 JP 2005019633
(71) Applicant: Fuji Oil Company, Ltd., Osaka-shi, Osaka 542-0086 (JP)
(72) Inventor: NAKAMURA, Yasushi, Sumiyoshi-cho, Izumisano-shi Osaka, 5988 (JP); OKA, Hiroko, 1 (JP); SAKATA, Tetsuo, Sumiyoshi-cho, Izumisano-shi Osaka, 5988 (JP)
(74) Representative: Hayes, Adrian Chetwynd
(86) International application number: PCT/JP2006/301294
(87) International publication number: WO 2006/080426

(57) **Abstract**

A soybean protein that without any soybean odor and nasty aftertastes, such as acerbity and astringency, is refreshing and ensures excellent flavor, and that when used in a protein beverage, etc., excels in powder dispersion and dissolution at the time of dissolving operation and is free of roughness thereof, realizing excellent throat feeling. There is provided a process for producing a soybean protein, **characterized by** adding an Mg compound to a soybean protein slurry or solution, heating the thus neutralized solution and adding a protease thereto, thereby carrying out hydrolysis of the protein.

## Description

### Technical Field

The present invention provides a soybean protein having an excellent flavor, in particular, in which nasty aftertastes are effectively suppressed.

### Background Art

In recent years, public consciousness about health has been increasingly enhanced, which has greatly developed the market of health foods. Soybeans are a material getting a lot of attention in terms of their nutrient components and physiological effects. A soybean protein obtained by purifying a protein component from a soybean is expected as a protein source and to have an anti-cholesterol effect, a fat burning effect and the like, and thus has been widely utilized as a raw material for developing health foods that declare these effects, including powdered beverages and baked sweets.

Thus, a soybean protein receives attention as a new item for development of health foods. In the market of health foods, however, a large amount of soybean protein is usually contained in foods, so that the obtained foods have the so-called "soybean odor", which is due to unpleasant odor components such as aldehydes, ketones and alcohols derived from soybeans and in a processing step of soybeans, and strong acerbic and astringent aftertastes. Therefore, the flavor of foods containing a soybean protein is strongly desired to be further improved. In addition, with regard to a powdery soybean protein used for powdered beverages, it has poor dispersibility in water, for example some lumps remain when a powdery soybean protein is dissolved in water, and therefore improvement of the dispersibility is also desired.

A method for solving such problems of improvement of a flavor and dispersibility at the same time is not currently known, although there are known methods for improving a flavor or dispersibility as described below.

As one of methods for improving the flavor of a soybean protein, an extraction-removal treatment of nasty flavor components which comprises a washing treatment with an alcohol in a processing step of a soybean protein has been known from a long time ago. In addition, as a method for improving the flavor of a soybean protein utilizing a Ca compound or an Mg compound, JP-A 2000-83595 discloses a process for producing a soybean protein which comprises adding and mixing an organic acid or a salt thereof, and a divalent metal calcium or magnesium ion. However, dispersibility in water is not as good as in the present invention.

As an improved method in flavor of JP-A 2000-83595, W02002/028197 discloses a method for obtaining a powdery isolated soybean protein which comprises adding phosphoric acid, an organic acid or a salt thereof to a soybean protein slurry or solution, further adding a Ca compound or an Mg compound thereto, heating the slurry or solution under an acid condition followed by neutralization, and then spray-drying the slurry or solution. With regard to flavor, however, the obtained powdery isolated soybean protein has a strong salty taste, and the dispersibility of said protein in water is not as good as in the present invention.

As a method for improving the dispersibility of an isolated soybean protein powder, a method comprising coating hardly-digestible dextrin on the surface of a soybean protein and granulating it, and a method comprising addition and drying of a starch degradation product are known. However, it is necessary to add a large amount of hardly-digestible dextrin or a starch degradation product, so that it is difficult to commercialize a product containing a large amount of soybean protein under the current circumstance. Besides these methods, there is a known method which comprises adding an additive having great water wettability at a stage before powderization of a soybean protein and adding an additive having small water wettability after powderization of a soybean protein. However, the effect on dispersibility is different between these methods. On the other hand, JP-A 8-131083 discloses a soybean protein powder obtained by blending and mixing a certain polyglycerin fatty acid ester, followed by drying, but it is difficult to improve a flavor and dispersibility simultaneously.

Although there are many known methods for enzymatic degradation of soybean protein, very few of them are aiming to improve a flavor and dispersibility simultaneously. Among them, JP-A 8-154593 discloses a process for producing a soybean protein which comprises adding a fat or oil at a stage before and after hydrolysis of a soybean protein to bring it into the emulsified state, followed by drying. However, a large amount of a fat or oil to be added is necessary for dispersing the soybean protein, so that it is difficult to provide a high protein content. In addition, a material containing an oil or fat is not suitable to use for health foods. In addition, JP-A 8-154593 dose not utilize a divalent metal compound such as an Mg compound or a Ca compound as in the present invention. As described above, a soybean protein excellent in both a flavor and dispersibility has never been known.

### Disclosure of Invention

### Problems to be solved by the invention

An object of the present invention is to obtain a soybean protein with a refreshing taste and a good flavor which has no soybean odor and no nasty aftertastes such as acerbity and astringency, and obtain secondarily said soybean protein in which both its flavor and dispersibility are improved.

### Means for solving the problems

In order to solve the aforementioned problems, the present inventors intensively studied. As a result, they found that performing two steps of (A) adding an Mg compound, particularly MgO, preferably in combination with a Ca compound, to a soybean protein slurry or solution and (B) adding a protease to the soybean protein slurry or solution to carry out protein hydrolysis produced a soybean protein whose flavor and dispersibility were both satisfactory, and finally completed the present invention.

Thus, the present invention provides:
(1) a process for producing a soybean protein which comprises performing two steps of (A) adding an Mg compound to a soybean protein slurry or solution and (B) adding a protease to the soybean protein slurry or solution to carry out protein hydrolysis;
(2) the process according to the above (1), wherein Mg is added in an amount of 0.03 to 0.36% by weight of the soybean protein solid content;
(3) the process according to the above (1), wherein the Mg compound to be added is an Mg oxide;
(4) the process according to the above (1), wherein the Mg compound is used in combination with a Ca compound;
(5) the process according to the above (1), wherein the protein hydrolysis is carried out to such an extent that solubility in 0.22M trichloroacetic acid (TCA) is in a range of 13 to 30%;
(6) the process according to the above (1), which comprises subjecting a neutralized solution before or after the protein hydrolysis to high-temperature short-time heating at 100°C to 155°C for 5 seconds to 10 minutes; and
(7) the process according to the above (1), which comprises adding an emulsifier having an HLB of 4 to 10.

### Effect of the Invention

According to the present invention, a soybean protein having an excellent flavor and secondarily excellent dispersibility, characterized by a good throat feeling without roughness in a solution state can be obtained.

### Best Mode for Carrying Out the Invention

The present invention is a process for producing a soybean protein which comprises steps of (A) adding an Mg compound to a soybean protein slurry or solution and (B) adding a protease to the soybean protein slurry or solution to carry out protein hydrolysis. Essential features will be explained below.

A soybean protein slurry or solution used in the present invention includes a slurry obtained by adding water to defatted soybeans and then grinding the mixture, a slurry obtained by removing whey from the above-described slurry, an extract obtained by extracting defatted soybeans with water and then removing bean curd lees, a curd slurry obtained by acid-precipitating the above-described extract, and a neutralized solution obtained by neutralizing the above-described acid-precipitated curd slurry. Considering the flavor and high-protein content of the final product, it is preferable to use a curd slurry or a neutralized solution obtained by neutralizing a curd slurry as a raw material.

In the present invention, an Mg compound is added to the soybean protein slurry or solution. The Mg compound used in the present invention includes salts, a hydroxide and an oxide of Mg. Examples of the Mg compound which can be used for foods include Mg chloride, Mg sulfate, Mg carbonate, Mg oxide, Mg hydroxide and the like. Among them, Mg oxide can maximally exert an effect of reducing nasty aftertastes, being preferable.

Although Mg oxide is hardly soluble in water, the pH of a soybean protein solution is increased when Mg oxide is added to the soybean protein solution. This is probably because Mg oxide is slowly dissolved in a soybean protein solution and then slowly reacted with a soybean protein. Therefore, it is expected that flavor components being adsorbed to a soybean protein become easily dissociated due to a heating deodorizing treatment when this soybean protein solution is heated.

The addition amount of the Mg compound is preferably 0.03 to 0.36% by weight, more preferably 0.09 to 0.24% by weight of Mg, based on the solid content by weight of a soybean protein slurry or solution. When the addition amount is less than 0.03% by weight of Mg, an effect of reducing nasty aftertastes is small and thus the objective effect can not be sufficiently obtained. When the addition amount exceeds 0.36% by weight of Mg, not only a further effect of reducing nasty aftertastes can not be expected, but also insolubilization of a protein due to a reaction between Mg and the protein is promoted, a deodorizing effect on the soybean odor is reduced and the taste of Mg itself appears, and therefore negative effects on flavor improvement are produced.

In the present invention, it is preferable to use an Mg compound in combination with a Ca compound. By using an Mg compound in combination with a Ca compound, it becomes possible to prepare a soybean protein whose nasty aftertastes (acerbity, astringency) and soybean odor are remarkably reduced and which has better dispersibility.

In addition, by combined use of an Mg compound and a Ca compound and the subsequent heating treatment (heating deodorization), the nasty taste-reducing effect and the dispersibility-improving effect on the obtained soybean protein are enhanced. Further, the heating treatment (heating deodorization) enhances the effect of reducing the soybean odor and nasty tastes of a soybean protein obtained after the subsequent enzymatic degradation.

The Ca compound to be used in combination with the Mg compound in the present invention includes salts, a hydroxide and an oxide of Ca. Examples of the Ca compound which can be used for foods include Ca hydroxide, Ca chloride, Ca carbonate, Ca gluconate, Ca glycerophosphate, and the like. Considering influence on a neutralization step of a soybean protein slurry or solution and the protein content of the final product, Ca hydroxide and Ca carbonate are suitable. The addition amount of the Ca compound is preferably 0.12 to 0.42% by weight, more preferably 0.16 to 0.32% by weight of Ca, based on the solid content by weight of a soybean protein slurry or solution. When the addition amount is less than 0.12% by weight, an effect of reducing nasty aftertastes is small and thus the objective effect can not be sufficiently obtained. When the addition amount exceeds 0.42% by weight, insolubilization of a protein due to a reaction between Ca and the protein is promoted and the taste of Ca itself appears, and therefore negative effects are produced similarly to Mg.

The combined addition amount of the Mg compound and the Ca compound varies depending on the kinds of these compounds used. Considering the quality (protein content, solubility of protein, flavor) of the final product, the sum of Mg and Ca to be added is suitably not more than 1.2% by weight, based on the solid content by weight of a soybean protein slurry or solution. The addition ratio of Mg to Ca is not particularly limited, and it is preferably in a range of 2:1 to 1:2 from a viewpoint of flavor and dispersibility.

In order to further reduce the soybean odor and nasty aftertastes, the soybean protein slurry or solution is subjected to protein hydrolysis with a protein hydrolase.

A protein hydrolase used in the present invention is preferably a combination of peptidase and protease or a protease enzyme also having the peptidase activity. Peptidase is a so-called exo type degrading enzyme which acts on the ends of a protein. Commercially available peptidase enzymes having high peptidase activity include "Peptidase R" and "Umamizyme G" manufactured by Amano Enzyme Inc., "Sumizyme FLAP" manufactured by Shin Nihon Chemical Co. Ltd. and the like. Examples of protease, which is called an endo type, include "Protease N (Amano) G", "Protease NL (Amano) G" and "Proleser FG-F" manufactured by Amano Enzyme Inc., "Protin A" and "Protin P" manufactured by Daiwa Kasei K.K. and the like. Both of these enzymes can be used in combination. Further, it is also possible to use only a commercially available protease enzyme relatively having peptidase activity, as it is. Specific examples of such an enzyme include "Protease A", "Protease M" and "Protease P" manufactured by Amano Enzyme Inc., "Sumizyme FP" manufactured by Shin Nihon Chemical Co. Ltd., and "Flavorzyme" manufactured by Novozymes Japan Co. Ltd.

In the present invention, protein hydrolysis is suitably carried out using the aforementioned protein hydrolase to such an extent that the solubility in 0.22 M TCA becomes 13 to 30%, preferably 18 to 25%. In this case, the free amino acid amount is preferably 0.1 to 0.8% by weight, more preferably 0.18 to 0.5% by weight. When protein hydrolysis is carried out to such an extent that the solubility in 0.22 M TCA is lower than 13%, a deodorizing effect due to dissociation of unpleasant odor components of the soybean odor which are probably adsorbed to a protein, and an effect of reducing nasty aftertastes are deficient. When protein hydrolysis is carried out to such an extent that solubility in 0.22 M TCA exceeds 30%, although a deodorizing effect on the soybean odor is increased, the content of low-molecular peptides produced by the protein degradation is increased and therefore tastes derived from the peptides such as bitterness and umami appear strongly, so that the final product has undesirable aftertastes. When protein hydrolysis is carried out to such an extent that the free amino acid amount is lower than 0.1% by weight and the solubility in 0.22 M TCA is high, strong bitterness appears and therefore nasty aftertastes are increased. When protein hydrolysis is carried out to such an extent that the free amino acid amount is lower than 0.1% by weight and the solubility in 0.22 M TCA is low, it is difficult to reduce acerbity and astringency in addition to bitterness and therefore this case is not preferable. When protein hydrolysis is carried out to such an extent that the free amino acid amount exceeds 0.8% by weight, the tastes of amino acids strongly appear and therefore nasty tastes are increased.

The addition amount, reaction temperature and reaction time of the enzyme do not influence the obtained effects as long as they are selected so that the hydrolysis extent can be within the above-described preferable range. In view of workability in production and cost, the most efficient reaction condition can be selected.

The soybean protein slurry or solution is suitably adjusted to a solid content of 7 to 16% by weight, preferably 10 to 14% by weight, at any stage during the two steps of (a) adding an Mg compound and (b) adding a protease to carry out protein hydrolysis. When the solid content is lower than 7% by weight, the resulting soybean protein has low dispersibility and at the same time, it is not suitable from a viewpoint of drying efficiency. When the solid content exceeds 16% by weight, a subsequent heating treatment leads to the gelation of a protein and then an increase of its viscosity, thereby workability is remarkably lowered and the efficiency of deodorizing the soybean odor is lowered, and therefore it is not suitable.

The soybean protein slurry or solution is also neutralized at any stage during the two steps of (A) adding an Mg compound and (B) adding a protease to carry out protein hydrolysis. The neutralization is suitably performed by adjusting the soybean protein slurry or solution to pH 5.5 to 8.0, preferably pH 6.8 to 7.8. When the soybean protein slurry or solution is adjusted to lower than pH 5.5, the solubility of a protein is decreased, which lowers the efficiency of deodorizing the soybean odor, and also which influences the final soybean protein and thereby a solution prepared using the final soybean protein often has a rough feeling on the tongue. On the other hand, when the soybean protein slurry or solution is adjusted to higher than pH 8.0, a subsequent heating treatment leads to deterioration in the flavor and color tone including generation of the alkaline odor and a change of color tone into a yellow-green like color, and therefore it is often not preferable. Examples of an alkaline agent to be used for neutralization include Na hydroxide and K hydroxide which can be used for foods. The alkaline agent can be used in combination with alkaline agents of the Mg compound and the Ca compound to be added, in the aforementioned addition amount range.

The soybean protein slurry or solution is subjected to a heating treatment for reducing the soybean odor before or after a protein hydrolysis step, preferably at least before a protein hydrolysis step, more preferably before and after a protein hydrolysis step. The efficiency of deodorizing the soybean odor by the subsequent enzymatic degradation can be more enhanced by heat-denaturing a protein. Heat denaturation of a protein leads to exposure and degradation of hydrophobic parts hidden in the interior of the protein, and thereby deodorization of unpleasant flavor components is promoted. Therefore, it is believed that the heating treatment produces an effective result.

The heating treatment is carried out at 100 to 155°C, more preferably 110 to 150°C and for 5 seconds to 10 minutes, more preferably 30 seconds to 3 minutes. When the heating temperature is lower than 100°C or the heating time is shorter than 5 seconds, an effect of reducing an unpleasant odor, the so-called "soybean odor", is deficient. When the heating temperature exceeds 155°C or the heating time exceeds 10 minutes, a protein is degraded and also, discoloration due to heating is easily generated, which influences the quality of the final product. Therefore, it is preferable to avoid such conditions.

As a heating method, either an indirect heating method or a direct heating method can be utilized. From the viewpoint of deodorizing efficiency, use of a steam injection-type direct heating sterilizer is suitable for reducing the soybean odor, in which water vapor at a high temperature and a high pressure is directly blown into a soybean protein slurry or solution, heating is retained, and then the pressure is rapidly released in a vacuum flush pan. The above-described steps can be carried out most efficiently and most effectively in the order of addition of an Mg compound, neutralization, heating, and then protein hydrolysis.

Subsequently to the enzymatic reaction, a heating treatment is preferably carried out for the purpose of enzyme inactivation, further deodorization of the soybean odor, and sterilization. This heating may be a second heating treatment. The heating treatment can be carried out by either an indirect heating method or a direct heating method, and suitably by using a steam injection-type direct heating sterilizer, as described above. In this case, the heating temperature is in a range of 100 to 155°C, more preferably 110 to 150°C and the heating time is in a range of 5 seconds to 10 minutes, more preferably 30 seconds to 3 minutes.

Since the soybean protein which has undergone enzymatic degradation has a reduced affinity for soybean odor components and therefore the soybean odor components are in a state of being easily dissociated from the soybean protein, a heating treatment promotes dissociation of the soybean odor components to enhance the deodorizing effect. The aforementioned heating time is efficient.

For the purpose of further improving dispersibility, to the soybean protein slurry or solution may be added an emulsifier having an HLB value of 4 to 10 in an amount of 0.1 to 0.8 % by weight based on the solid content by weight of the soybean protein slurry or solution. After the addition of an emulsifier, the soybean protein slurry or solution is preferably homogenized. When an emulsifier having an HLB of lower than 4 is added, an improving effect on the dispersibility of the resulting soybean protein is small. When an emulsifier having an HLB of higher than 10 is added, the water wettability of the resulting soybean protein is too high and therefore lumps are easily formed, so that a dispersibility-improving effect tends to decrease.

Examples of the emulsifier include food emulsifiers such as sugar esters, glycerin fatty acid esters, sorbitan fatty acid esters, propylene glycol fatty acid esters, and lecithin. Inter alia, a sorbitan fatty acid ester is preferably added. When the addition amount of the emulsifier is less than 0.1% by weight, a dispersibility-improving effect is deficient. When the addition amount of the emulsifier exceeds 0.8% by weight, the dispersibility is deteriorated. Therefore, the aforementioned addition amount range is preferable. In addition to use of the aforementioned emulsifier, or additionally, granulation of a powdery soybean protein, or distribution of a hydrophobic substance on the surface of a powdery soybean protein may be performed.

In the present invention, the soybean protein slurry or solution can be powderized. The powderization is suitably attained by drying using a spray dryer, from the viewpoint of quality and production cost. As a spray drying method, either a disc-type atomizer manner, or spray drying with a one-fluid or two-fluid nozzle can be utilized. The moisture content of the powderized soybean protein is not particularly limited as long as it does not lead to the putrefaction of the protein during storage. Usually, the moisture content of the powderized soybean protein is adjusted in a range of around 3 to 12% by weight, preferably 4 to 6.5% by weight.

### Examples

Hereinafter, embodiment of the present invention will be explained by reference to Examples, to which the technical scope of the present invention is not limited.

### Example 1

To 10 kg of a low-denatured defatted soybean (manufactured by Fuji Oil Co. Ltd.,) was added a 15-fold amount of water. The mixture was adjusted to pH 7.5 with 1N NaOH, stirred and extracted using a homomixer at room temperature for 1 hour, and then centrifuged (1000 g x 10 min) to remove bean curd lees components. The resulting defatted soybean milk was adjusted to pH 4.5 by addition of 1N HCl to induce isoelectric precipitation of protein components. Precipitates were collected by centrifugation to obtain an isolated soybean protein curd (hereinafter, referred to as "curd"). The solid content of the curd was about 30% by weight.

After water was added to the curd so that the solid content became 12% by weight, Mg oxide and Ca hydroxide were added under conditions shown in Table 1. The resulting solution was neutralized to pH 7.3 with Na hydroxide. Then, the neutralized protein solution was heated at 140°C for 1 minute using a direct heating sterilizer to obtain a soybean protein solution. The soybean protein solution was subjected to protein hydrolysis at a reaction temperature of 55°C for 30 minutes using both of exo-type protease and end-type protease of "Peptidase R" and "Protease N (Amano) G" (manufactured by Amano Enzyme Inc.) in such amounts that the TCA solubility became 24% and the free amino acid content became 0.21 to 0.23%.

After enzymatic hydrolysis, the soybean protein solution was heated again at 140°C for 10 seconds using a direct heating sterilizer. Then, a sorbitan fatty acid ester (HLB 4.9) was added in an amount of 0.2% by weight of the solid content of the soybean protein solution. The mixture was homogenized and then spray-dried to obtain a powdery soybean protein.

About a flavor (soybean odor, and nasty aftertaste), a 5% by weight solution of the powdery soybean protein in water was organoleptically evaluated by 10 panelists. Scoring is under a scale of 1 to 10. As a score is higher, the soybean odor or nasty aftertaste is less, being better. Scores were shown as the average of 10 panelists. In addition, for evaluating the dispersibility of a soybean protein in an aqueous solution, 15 g of the powdery soybean protein was added to 200 ml of water at 20°C, and then stirred for 1 minute using a spoon to be dispersed. Then, the state of lumps was visually evaluated under a scale of 1 to 5. A score of 5 indicates no formation of lumps. A score of 4 indicates that several small lumps remained. A score of 3 indicates that about 10 lumps remained. A score of 2 indicates that lumps remained over about half of the liquid surface. A score of 1 indicates that lumps remained over the whole liquid surface, being worse.

**(Table 1) Addition amounts of Mg oxide and Ca hydroxide, and quality of prepared soybean protein**

| Test condition | T-1 | T-2 | T-3 | T-4 | T-5 | T-6 | T-7 | T-8 |
|---|---|---|---|---|---|---|---|---|
| Added Mg (%) | 0 | 0 | 0.01 | 0.04 | 0.15 | 0.15 | 0.36 | 0.48 |
| Added Ca (%) | 0 | 0.11 | 0.11 | 0.11 | 0 | 0.22 | 0.22 | 0.11 |
| 0.22 M TCA solubility (%) | 24 | 24 | 24 | 24 | 24 | 24 | 24 | 24 |
| Free amino acid (%) | 0.22 | 0.21 | 0.21 | 0.23 | 0.21 | 0.21 | 0.22 | 0.22 |
| Soybean odor | 6.2 | 6.6 | 7.0 | 7.4 | 8.0 | 8.9 | 8.8 | 8.2 |
| Nasty aftertaste | 4.2 | 4.4 | 4.8 | 7.0 | 8.0 | 8.7 | 7.6 | 5.8 |
| Dispersibility | 2 | 3 | 3 | 3 | 3 | 4 | 4 | 4 |
| Evaluation | × | × | Δ | ○ | ⊚ | ⊚ | ⊚ | ○ |

| | | | | | | | | |
|---|---|---|---|---|---|---|---|---|
| ×: Unsatisfied, Δ: Fair, ○: Better, ⊚: Very good | | | | | | | | |

In the case of T-3 in which the addition amount of Mg was 0.01% by weight, a nasty aftertaste-improving effect was deficient even when Ca was added in combination. In the case of T-8 in which the addition amount of Mg exceeded 0.36% by weight, the obtained soybean protein had a strong harsh taste that was probably derived from Mg and thus had an increase of nasty taste, and therefore a flavor-improving effect was not big. In the case of T-2 in which Ca was added alone, a soybean odor-reducing effect and a nasty aftertaste-improving effect did not reach satisfactory levels. It was shown that when an Mg compound was added in an amount of 0.03 to 0.36% by weight in terms of Mg and a Ca compound was added in combination, as described in the present invention, the prepared soybean protein had a further improved flavor and dispersibility.

### Example 2

After water was added to a curd obtained as described in Example 1 so that the solid content became 12% by weight, Mg oxide, Mg chloride, Mg sulfate or Mg carbonate was added in an amount of 0.15% by weight of the protein solid content in terms of Mg (i.e. 0.25% by weight in terms of Mg oxide, 0.39% by weight in terms of Mg chloride, 0.74% by weight in terms of Mg sulfate, or 0.52% by weight in terms of Mg carbonate), and Ca hydroxide was further added in an amount of 0.4% by weight of the protein solid content (0.22% by weight in terms of Ca). The resulting solution was neutralized to pH 7.3 with Na hydroxide. Then, the neutralized protein solution was heated at 140°C for 1 minute using a direct heating sterilizer to obtain a soybean protein solution of a denatured protein. Enzymatic hydrolysis was carried out under the same enzyme addition conditions and the same reaction conditions as Example 1. The soybean protein solution was heated again at 140°C for 10 seconds using a direct heating sterilizer. Then, a sorbitan fatty acid ester (HLB 4.9) was added in an amount of 0.2% by weight of the solid content of the soybean protein solution. The mixture was homogenized and then spray-dried to obtain a powdery soybean protein. The prepared powdery soybean protein was evaluated according to the same manner as that of Example 1.

**(Table 2) Comparison of quality between various Mg**

| Test condition | T-9 | T-10 | T-11 | T-12 |
|---|---|---|---|---|
| Added Mg | Mg oxide | Mg chloride | Mg sulfate | Mg carbonate |
| 0.22 M TCA solubility (%) | 24 | 24 | 24 | 24 |
| Free amino acid (%) | 0.21 | 0.21 | 0.21 | 0.21 |
| Soybean odor | 8.9 | 7.9 | 8.6 | 8.4 |
| Nasty aftertaste | 8.7 | 8.2 | 7.8 | 8.0 |
| Dispersibility | 4 | 4 | 4 | 4 |

As shown in the result of Table 2, when a use form of Mg was Mg oxide, a soybean odor-reducing effect and a nasty aftertaste-reducing effect were the biggest.

### Example 3

After water was added to a curd obtained as described in Example 1 so that the solid content became 12% by weight, Mg oxide was added in an amount of 0.25% by weight of the protein solid content (0.15% by weight in terms of Mg), and Ca hydroxide was further added in an amount of 0.4% by weight of the protein solid content (0.22% by weight in terms of Ca). The resulting solution was neutralized to pH 7.3 with Na hydroxide. Then, the neutralized protein solution was heated at 140°C for 1 minute using a direct heating sterilizer to obtain a soybean protein solution of a denatured protein. Enzymatic hydrolysis was carried out under the same conditions as Example 1 except that the addition amount of an enzyme was adjusted so that different degradation extents shown in Table 3 could be obtained.

**(Table 3) Qualities when degradation extent was changed at approximately constant free amino acid level**

| Test condition | T-13 | T-14 | T-15 | T-16 | T-17 | T-18 |
|---|---|---|---|---|---|---|
| 0.22 M TCA solubility (%) | 11 | 14 | 18 | 24 | 29 | 33 |
| Free amino acid (%) | 0 | 0.18 | 0.19 | 0.21 | 0.24 | 0.25 |
| Soybean odor | 5.1 | 7.1 | 8.2 | 8.9 | 8.8 | 8.8 |
| Nasty aftertaste | 4.3 | 7.0 | 8.3 | 8.7 | 7.8 | 4.8 |
| Dispersibility | 2 | 3 | 4 | 4 | 3 | 3 |
| Evaluation | Δ | ○ | ⊚ | ⊚ | ⊚ | ○ |

| | | | | | | |
|---|---|---|---|---|---|---|
| Δ: Fair, ○: Better, ⊚: Very good | | | | | | |

As shown in the result of Table 3, the soybean odor and nasty aftertaste of the obtained soybean protein were considerably reduced when a degradation extent (TCA solubility) was 14%, i.e. the degradation extent of T-14, or more. However, a deodorizing effect in the obtained soybean protein was not greatly increased when a degradation extent was 24% or more. In addition, nasty aftertastes (acerbity, astringency) were clearly felt when a degradation extent was less than 14%, i.e. the degradation extent of T-14, and a reduction in nasty tastes was not sufficient yet. When a degradation degree was increased to 33%, i.e. the degradation extent of T-18, or more, a bitter taste that probably resulted from the degradation became remarkable and at the same time, acerbity became stronger, and therefore improvement of the flavor was not sufficient in spite of little soybean odor.

### Example 4

After water was added to a curd obtained as described in Example 1 so that the solid content became 12% by weight, Mg oxide was added in an amount of 0.25% by weight of the protein solid content and Ca hydroxide was further added in an amount of 0.4% by weight of the protein solid content. The resulting solution was adjusted to pH 5.8 or pH 7.2 with Na hydroxide. Then, the protein solution was heated under conditions shown in Table 4 using a direct heating sterilizer to obtain a soybean protein solution of a denatured protein. Enzymatic hydrolysis was carried out under the same enzyme addition conditions and the same reaction conditions as Example 1. The soybean protein solution was heated again at 140°C for 10 seconds using a direct heating sterilizer. Then, a sorbitan fatty acid ester (HLB 4.9) was added in an amount of 0.2% by weight of the solid content of the soybean protein solution. The mixture was homogenized and then spray-dried to obtain a powdery soybean protein. The prepared powdery soybean protein was evaluated according to the same manner as that of Example 1.

**(Table 4) Effect of neutralization pH and heating temperature of soybean protein solution**

| Test condition | T-19 | T-20 | T-21 | T-22 | T-23 |
|---|---|---|---|---|---|
| Neutralization pH | 7.2 | 7.2 | 7.2 | 7.2 | 5.8 |
| Heating temperature (°C) | Unheating | 90 | 110 | 160 | 140 |
| Heating time | - | 1 min | 3 sec | 10 sec | 1 min |
| 0.22 M TCA solubility (%) | 24 | 24 | 24 | 24 | 24 |
| Free amino acid (%) | 0.19 | 0.18 | 0.20 | 0.23 | 0.25 |
| Soybean odor | 4.8 | 5.0 | 5.8 | 6.4 | 6.0 |
| Nasty aftertaste | 6.0 | 6.8 | 7.0 | 7.5 | 7.2 |
| Dispersibility | 3 | 3 | 3 | 4 | 5 |
| Evaluation | Δ | Δ | Δ | ○ | ○ |

| | | | | | |
|---|---|---|---|---|---|
| Δ: Fair, ○: Better, ⊚: Very good | | | | | |

When the neutralized solution was heated at 90°C, i.e. lower than 100°C, the soybean odor still remained due to insufficient deodorization of soybean odor, and a nasty aftertaste-improving effect was small. When the heat treatment was carried out at 160°C, i.e. higher than 155°C, a different unpleasant odor resulting from the heating was generated, and therefore a flavor-improving effect was reduced. In the case of T-19 in which heating was not carried out at all, a soybean odor-reducing effect and a nasty aftertaste-improving effect were small. Further, in the case of T-23 in which the neutralized solution was adjusted to lower than pH 6.0, although the obtained soybean protein was dusty and had low solubility, it did not have a deteriorated flavor and therefore it was expected to be applied to use or the like other than in beverages.

### Example 5

After water was added to a curd obtained as described in Example 1 so that the solid content became 12% by weight, Mg oxide was added in an amount of 0.25% by weight of the protein solid content and Ca hydroxide was further added in an amount of 0.4% by weight of the protein solid content. The resulting solution was neutralized to pH 7.3 with Na hydroxide. Then, the neutralized protein solution was heated at 140°C for 1 minute using a direct heating sterilizer to obtain a soybean protein solution of a denatured protein. Enzymatic hydrolysis was carried out under the same enzyme addition conditions and the same reaction conditions as Example 1. The soybean protein solution was heated again at 140°C for 10 seconds using a direct heating sterilizer. Then, each emulsifier shown in Table 5 was added in an amount of 0.2% by weight of the solid content of the soybean protein solution. The mixture was homogenized and then spray-dried to obtain a powdery soybean protein. The prepared powdery soybean protein was evaluated according to the same manner as that of Example 1.

**(Table 5) Effect of emulsifier added at the stage before powderization on dispersibility**

| Test condition | T-24 | T-25 | T-26 | T-27 | T-28 | T-29 | T-30 |
|---|---|---|---|---|---|---|---|
| Added emulsifier | Sugar ester | Sorbitan | Sorbitan | Sugar ester | Sugar ester | Sugar ester | No addition |
| HLB | 3 | 3.7 | 4.9 | 7 | 9 | 11 | - |
| 0.22 M TCA solubility (%) | 24 | 24 | 24 | 24 | 24 | 24 | 24 |
| Free amino acid (%) | 0.21 | 0.21 | 0.21 | 0.21 | 0.21 | 0.21 | 0.21 |
| Soybean odor | 8.9 | 8.9 | 8.9 | 8.9 | 8.9 | 8.9 | 8.9 |
| Nasty aftertaste | 8.7 | 8.4 | 8.7 | 8.7 | 8.7 | 8.7 | 8.7 |
| Dispersibility | 2 | 2 | 4 | 3 | 3 | 2 | 2 |
| | Δ | Δ | ⊚ | ○ | ○ | Δ | Δ |

| | | | | | | | |
|---|---|---|---|---|---|---|---|
| Δ: Fair, ○: Better, ⊚: Very good | | | | | | | |

Both a sorbitan fatty acid ester having an HBL of lower than 4 and a sugar ester having an HBL of lower than 4 could not considerably improve the dispersibility of the resulting isolated soybean protein. When sugar esters having different HLB values were used, it was shown that a sugar ester having an HLB of 4 to 10 as described in the present invention improved the dispersibility, and a sugar ester having an HLB exceeding 10 had a small dispersibility-improving effect.

### Industrial Applicability

A soybean protein of which flavor, in particular nasty aftertastes are excellently improved and which has a good throat feeling without roughness in a solution state could be produced by adding salts of divalent metals Mg and Ca to a soybean protein slurry or solution, neutralizing the slurry or solution, heat-treating the neutralized solution, adding peptidase in combination with protease or a protease enzyme also having the peptidase activity to the solution to carry out protein hydrolysis, and then adding an emulsifier having an HLB of 4 to 10, followed by powderization.

By utilizing such a soybean protein of the present invention, it is possible to allow a soybean protein to be present in foods in a larger content than ever before in producing health or nutritional foods, including powdered beverages, baked sweets and nutrient bars, which could not previously contain a large amount of a soybean protein because the previous soybean protein had a deteriorated flavor. At the same time, using the soybean protein of the present invention can solve the problems of dispersibility and roughness in powdered beverages and can improve powder-like feeling in baked sweets, nutrient bars and the like, thereby higher quality than before can be provided.

## Claims

1. A process for producing a soybean protein which comprises performing two steps of (A) adding an Mg compound to a soybean protein slurry or solution and (B) adding a protease to the soybean protein slurry or solution to carry out protein hydrolysis.

2. The process according to claim 1, wherein Mg is added in an amount of 0.03 to 0.36% by weight of the soybean protein solid content.

3. The process according to claim 1, wherein the Mg compound to be added is an Mg oxide.

4. The process according to claim 1, wherein the Mg compound is used in combination with a Ca compound.

5. The process according to claim 1, wherein the protein hydrolysis is carried out so that solubility in 0.22M trichloroacetic acid (TCA) is in a range of 13 to 30%.

6. The process according to claim 1, which comprises subjecting a neutralized solution before or after the protein hydrolysis to high-temperature short-time heating at 100°C to 155°C for 5 seconds to 10 minutes.

7. The process according to claim 1, which comprises adding an emulsifier having an HLB of 4 to 10.
